(19) Europäisches Patentamt
European Patent Office
Office européen des brevets

(11) **EP 2 565 094 A1**

(12) **EUROPEAN PATENT APPLICATION**
published in accordance with Art. 153(4) EPC

(43) Date of publication:
06.03.2013 Bulletin 2013/10

(51) Int Cl.:
*B60W 10/26* (2006.01)  *B60K 6/445* (2007.10)
*B60W 10/06* (2006.01)  *B60W 20/00* (2006.01)

(21) Application number: 10850684.1

(22) Date of filing: 27.04.2010

(86) International application number:
**PCT/JP2010/057417**

(87) International publication number:
**WO 2011/135665 (03.11.2011 Gazette 2011/44)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **TOYOTA JIDOSHA KABUSHIKI KAISHA**
**Toyota-shi,**
**Aichi-ken, 471-8571 (JP)**

(72) Inventor: **NIIMI, Kuniaki**
**Toyota-shi, Aichi 471-8571 (JP)**

(74) Representative: **TBK**
**Bavariaring 4-6**
**80336 München (DE)**

(54) **CONTROL DEVICE FOR VEHICLE**

(57)    A control device (14) functions as a vehicular control device to control electrically charging/discharging an electrical storage device (BAT). The control device (14) includes a fuel calculation unit (302) which calculates an amount of fuel consumed used to electrically charge the electrical storage device (BAT), a charge calculation unit (304) which calculates electrical energy charged to the electrical storage device (BAT), and an evaluation unit (306) which calculates a numerical evaluation (F/E) from a result of a calculation done by the fuel calculation unit (302) and that done by the charge calculation unit (304) for an amount of fuel consumed corresponding to an amount of electric power charged in the electrical storage device (BAT) availably.

FIG.4

**Description**

TECHNICAL FIELD

The present invention relates to a vehicular control device and particularly to a vehicular control device that controls charging and discharging an electrical storage device mounted in a vehicle.

BACKGROUND ART

In recent years, carbon dioxide gas emission reduction is taken seriously in view of global warming. Carbon dioxide gas emission can effectively be reduced by improving vehicular fuel efficiency. Accordingly, hybrid vehicles which use an engine and a motor together as a motive power source and use fuel and electric power together as energy are also increasingly produced.

Japanese Patent Laying-Open No. 2004-260908 (Patent Literature 1) discloses a method for managing a vehicular electric system by calculating and utilizing an in-vehicle battery's energy cost to manage the vehicular electric system's electric power cost for further improved fuel efficiency.

CITATION LIST

PATENT LITERATURE

PTL 1: Japanese Patent Laying-Open No. 2004-260908
PTL 2: Japanese Patent Laying-Open No. 2002-118905

SUMMARY OF INVENTION

TECHNICAL PROBLEM

Japanese Patent Laying-Open No. 2004-260908 describes that a source of electric power used to electrically charge a battery and the amount of the electric power charged are determined from a difference between an electric power production cost of a plurality of electric power energy sources and a cost of an amount of electric power stored in the battery, and the battery's currently available capacity.

While a hybrid vehicle uses energy of gasoline or a similar fuel and electrical energy that is received from a battery as energy sources, it is required to be further improved to improve individual users' actual fuel efficiency values.

A hybrid vehicle drives a motor with electrical energy charged in a battery. The electrical energy charged in the battery includes energy electrically charged as an electric power generator is operated by an engine, and regenerated energy recovered by the motor when the vehicle goes downhill, is decelerated, and/or the like. Thus, the electrical energy charged in the battery constantly varies in value depending on how the vehicle is actually used.

Accordingly, not only converting fuel energy to electrical energy but also providing energy conversion based on how the vehicle is actually used are important in further popularizing hybrid vehicles. In other words, different drivers can drive vehicles in different patterns, and accordingly, it is important to adopt fuel/electric power conversion efficiency management that accommodates such different travelling patterns to allow the battery to be electrically charged/discharged in a variable method for improved actual fuel efficiency.

The present invention contemplates a hybrid vehicle that can achieve improved actual fuel efficiency.

SOLUTION TO PROBLEM

The present invention in summary contemplates a control device for a vehicle to control electrically charging/discharging an electrical storage device, including: a fuel calculation unit that calculates an amount of fuel consumed that is used to electrically charge the electrical storage device; a charge calculation unit that calculates electrical energy charged to the electrical storage device; and an evaluation unit that calculates a numerical evaluation relating to an available amount of fuel consumed corresponding to an amount of electric power charged in the electrical storage device, based on results of calculations done by the fuel calculation unit and the charge calculation unit.

Preferably, the control device for a vehicle further includes an engine control unit to control an engine. When the numerical evaluation is larger than a threshold value, the engine control unit decreases an engine start threshold value applied to start the engine for each vehicular speed.

Preferably the charge calculation unit includes a first calculation unit that calculates an amount of regenerated energy electrically charged to the electrical storage device by regenerated energy generated as the vehicle is decelerated, and a second calculation unit that calculates an amount of electrical energy that is generated by an electric power generator operated with mechanical motive power output from the engine and is electrically charged to the electrical storage device. The fuel calculation unit includes a third calculation unit that calculates a portion of an amount of fuel consumed that corresponds to an amount of electric power charged to the electrical storage device. The evaluation unit includes a fourth calculation unit that calculates an amount of fuel consumed per unit amount of energy currently stored in the electrical storage device, based on results of calculations done by the first calculation unit, the second calculation unit and the third calculation unit.

More preferably, the control device for a vehicle further includes a charge and discharge determination unit that determines a target value for an amount of electric power charged/discharged to/from the electrical storage device, based on a state of charge of the electrical storage device. When the amount of fuel consumed per unit amount of energy, calculated by the fourth calculation unit, increases to be larger than a threshold value, the charge and discharge determination unit modifies the target value to increase the amount of electric power charged to and decrease the amount of electric power discharged from the electrical storage device while the engine is operated with a load imposed thereon.

More preferably, when the amount of fuel consumed per unit amount of energy, calculated by the fourth calculation unit, increases to be equal to or larger than a threshold value, the engine control unit expands a range at a predetermined vehicular speed in a direction allowing the engine to have an increased torque. The engine is allowed to have an operating point moving on an engine operating line within the range.

ADVANTAGEOUS EFFECTS OF INVENTION

The present invention thus allows a hybrid vehicle to achieve improved actual fuel efficiency despite different drivers' different driving patterns.

BRIEF DESCRIPTION OF DRAWINGS

Fig. 1 shows a general configuration of a hybrid vehicle 1 of an embodiment.
Fig. 2 is a block diagram of a function of a control device 14 of Fig. 1 and peripheral devices associated therewith.
Fig. 3 shows a general configuration provided when control device 14 is implemented as a computer 100.
Fig. 4 is a functional block diagram relevant to calculating a numerical evaluation of an amount of fuel consumed, as done by control device 14 of Fig. 1.
Fig. 5 is a flowchart for illustrating a process performed by control device 14.
Fig. 6 is a flowchart for illustrating a process to update an F/E value.
Fig. 7 is a diagram for illustrating the F/E value and updating it, as indicated in Fig. 5 and Fig. 6.
Fig. 8 is another diagram for illustrating updating the F/E value, as shown in Fig. 6.
Fig. 9 is a diagram showing a threshold value applied to start the hybrid vehicle's engine.
Fig. 10 is a diagram showing a relationship between a state of charge of a high voltage battery BAT (%) and an amount of electric power charged thereto (kW).
Fig. 11 is a diagram for illustrating an upper limit value of engine load for vehicular speed.
Fig. 12 is a diagram for illustrating modifying an upper limit value Tu of the engine's torque for different F/E values.

DESCRIPTION OF EMBODIMENTS

Hereinafter reference will be made to the drawings to describe the present invention in embodiments. Note that in the figures, identical or corresponding components are identically denoted and will not be described repeatedly in detail.

First Embodiment

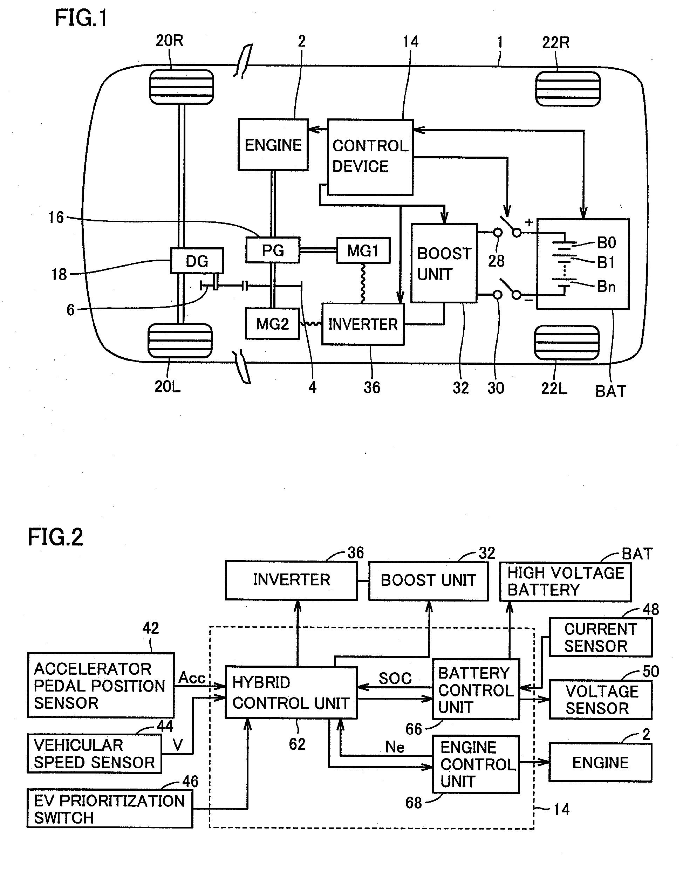

Fig. 1 shows a main configuration of a hybrid vehicle 1 of a first embodiment. Hybrid vehicle 1 is a vehicle employing an engine and a motor together for traveling.

With reference to Fig. 1, hybrid vehicle 1 includes front wheels 20R and 20L, rear wheels 22R and 22L, an engine 2, a planetary gear 16, a differential gear 18, and gears 4 and 6.

Hybrid vehicle 1 further includes a high voltage battery BAT disposed in the vehicle at a rear position, a boost unit 32 boosting in voltage a direct current (dc) electric power output from high voltage battery BAT, an inverter 36 communicating the dc electric power with boost unit 32, a motor generator MG1 coupled with engine 2 via planetary gear 16 to mainly generate electrical power, and a motor generator MG2 having a rotation shaft connected to planetary gear 16. Inverter 36 is connected to motor generators MG1 and MG2 to provide conversion between alternate current (ac) electric power and dc electric power provided from boost unit 32.

Planetary gear 16 has first, second and third rotation shafts connected to engine 2, motor generator MG1, and motor generator MG2, respectively.

The third rotation shaft has gear 4 attached thereto, and gear 4 drives gear 6 to transfer motive power to differential gear 18. Differential gear 18 receives the motive power from gear 6 and transmits the motive power to front wheels 20R and 20L, and also receives rotary force of front wheels 20R and 20L and transmits it via gears 6 and 4 to the third rotation shaft of the planetary gear.

Planetary gear 16 serves to split motive power between engine 2 and motor generators MG1 and MG2. More specifically, when the rotations respectively of two of the three rotation shafts of planetary gear 16 are determined, that of the remaining one rotation shaft will naturally be determined. Accordingly, engine 2 is operated in the most efficient range while the amount of electric power generated by motor generator MG1 is controlled, and motor generator MG2 is driven to control vehicular speed, to realize a generally energy-efficient vehicle.

A reduction gear may be provided to reduce the rotation of motor generator MG2 and transmit it to planetary gear 16, and a transmission gear may be provided to allow the reduction gear to have a variable reduction ratio.

High voltage battery BAT, serving as a dc power supply, is implemented for example as a nickel metal hydride, lithium ion, or similar secondary battery, and supplies dc electric power to boost unit 32 and is also charged with dc electric power provided from boost unit 32.

Boost unit 32 boosts dc voltage received from high voltage battery BAT and supplies the boosted dc voltage to inverter 36. Inverter 36 receives the supplied dc voltage and converts it to ac voltage, and controls driving motor generator MG1 when the engine is started. Furthermore, after the engine is started, ac electric power generated by motor generator MG1 is converted by inverter 36 to a direct current and converted by boost unit 32 to a voltage suitable for electrically charging high voltage battery BAT, and high voltage battery BAT is thus electrically charged.

Furthermore, inverter 36 drives motor generator MG2. Motor generator MG2 assists engine 2 to drive front wheels 20R and 20L. In braking the vehicle, the motor generator regeneratively operates to convert the rotary energy of the wheels to electrical energy. The obtained electrical energy is returned via inverter 36 and boost unit 32 to high voltage battery BAT. High voltage battery BAT is a battery pack including a plurality of series-connected cell units B0-Bn. Between boost unit 32 and high voltage battery BAT, system main relays 28, 30 are provided to interrupt high voltage when the vehicle is not operated.

Hybrid vehicle 1 further includes a control device 14. Control device 14 controls engine 2, inverter 36, boost unit 32 and system main relays 28, 30 in response to the driver's instructions and the outputs received from a variety of sensors attached to the vehicle.

Fig. 2 is a block diagram of a function of control device 14 of Fig. 1 and peripheral devices associated therewith. Note that control device 14 can be implemented by any of software and hardware.

With reference to Fig. 2, control device 14 includes a hybrid control unit 62, a battery control unit 66, and an engine control unit 68.

Battery control unit 66 transmits to hybrid control unit 62 a state of charge SOC of high voltage battery BAT obtained for example by accumulating a current that is charged/discharged to/from high voltage battery BAT, as based on a current and a voltage sensed by a current sensor 48 and a voltage sensor 50, respectively.

Engine control unit 68 controls a throttle for engine 2 and also detects engine speed Ne of engine 2 and transmits it to hybrid control unit 62.

Hybrid control unit 62 calculates an output that the driver requests, or a requested power, from a signal Acc output from an accelerator pedal position sensor 42 and vehicular speed V sensed by a vehicular speed sensor. Hybrid control unit 62 calculates required driving power (or total power) with the driver's requested power and in addition thereto high voltage battery BAT's state of charge SOC considered and furthermore calculates speed that the engine is required to achieve and power that the engine is required to output.

Hybrid control unit 62 transmits the required speed and power to engine control unit 68 to cause engine control unit 68 to control the throttle for engine 2.

Hybrid control unit 62 calculates the driver's requested torque in accordance with a traveling condition and causes inverter 36 to drive motor generator MG2, and also causes motor generator MG1 to generate electric power, as required.

Engine 2's driving power is distributed to that directly driving a wheel and that driving motor generator MG1. The sum of motor generator MG2's driving power and that of the engine for direct driving serves as the vehicle's driving power.

Furthermore, this vehicle is provided with an EV prioritization switch 46. When the driver presses EV prioritization switch 46 the engine's operation is limited. The vehicle thus in principle has the engine stopped and travels only by the driving power of motor generator MG2. The driver can press EV prioritization switch 46 to reduce noise in a residential area late at night and early in the morning and reduce exhaust gas in an indoor parking lot, a garage and the like, as required.

Keeping the engine stopped, however, may result in the battery running short or failure to obtain necessary power, and accordingly, if 1) EV prioritization switch 46 is switched off, 2) the battery has a state of charge SOC smaller than a predetermined value, 3) the vehicle attains a vehicular speed of at least a predetermined value (an engine start threshold value), or 4) the accelerator pedal has a position of at least a defined value, then, EV prioritization switch 46 having been turned on is turned off.

Control device 14 thus described with reference to Fig. 2 can also be implemented by software with a computer used.

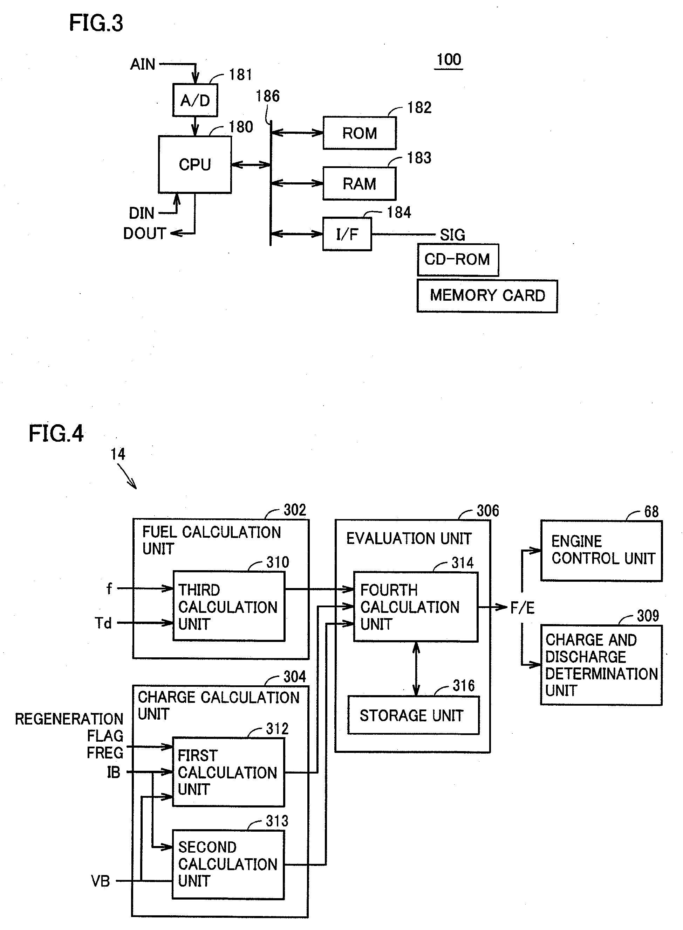

Fig. 3 shows a general configuration provided when control device 14 is implemented as a computer 100.

With reference to Fig. 3, computer 100 includes a CPU 180, an A/D converter 181, a ROM 182, a RAM 183, and an interface unit 184.

A/D converter 181 receives an analog signal AIN output and the like from a variety of sensors, converts the signal to a digital signal, and outputs the digital signal to CPU 180. Furthermore CPU 180 is connected through a data bus, an address bus or a similar bus 186 to ROM 182, RAM 183, and interface unit 184 to communicate data therewith.

ROM 182 has stored therein for example a program executed by and a map or similar data referenced by CPU 180. RAM 183 is a working area used for example when CPU 180 processes data, and RAM 183 stores therein a variety of variables or similar data temporarily.

Interface unit 184 for example: communicates with another electric control unit (ECU); inputs data to be rewritten when ROM 182 is implemented as an electrically rewritable flash memory or the like; reads a data signal SIG from a memory card, a CD-ROM, or a similar computer readable storage medium; and the like.

Note that CPU 180 communicates a data input signal DIN, a data output signal DOUT, and the like through an input/output port.

Control device 14 is not limited to such a configuration as described above, and may be implemented to include a plurality of CPUs. Furthermore, The Fig. 2 hybrid control unit 62, battery control unit 66, and engine control unit 68 may each have such a configuration as shown in Fig. 3.

Fig. 4 is a functional block diagram relevant to calculating a numerical evaluation of an amount of fuel consumed, as done by control device 14 of Fig. 1.

With reference to Fig. 4, control device 14 functions as a vehicular control device to control electrically charging/discharging high voltage battery BAT. Control device 14 includes a fuel calculation unit 302 which calculates an amount of fuel consumed that is used to electrically charge high voltage battery BAT, and a charge calculation unit 304 which calculates electrical energy charged to high voltage battery BAT. Control device 14 further includes an evaluation unit 306 which calculates a numerical evaluation F/E relating to an amount of fuel consumed that corresponds to an available amount of electric power charged in high voltage battery BAT, based on results of calculations done by fuel calculation unit 302 and charge calculation unit 304.

Charge calculation unit 304 includes a first calculation unit 312 which calculates an amount of regenerated energy electrically charged to high voltage battery BAT by regenerated energy provided in deceleration, and a second calculation unit 313 which calculates an amount of energy that is generated by an electric power generator operated with mechanical motive power output from the engine and is electrically charged to high voltage battery BAT. For example, when a regeneration flag FREG indicative of regeneration is activated, first calculation unit 312 calculates an amount of regenerated energy based on a current IB entering and exiting high voltage battery BAT and a voltage VB of high voltage battery BAT. For example, when regeneration flag FREG is turned off, second calculation unit 313 calculates an amount of electrical energy generated charged to high voltage battery BAT, based on current IB entering and exiting high voltage battery BAT and voltage VB of high voltage battery BAT.

Fuel calculation unit 302 includes a third calculation unit 310 which calculates a portion of an amount f of fuel consumed. The portion corresponds to an amount of electric power charged to high voltage battery BAT. Third calculation unit 310 for example uses a ratio of a torque Td transmitted from the engine to a driving wheel directly to a total torque output by the engine to calculate the portion of the amount f of fuel consumed. The portion corresponds to the amount of electric power charged to high voltage battery BAT. Note that this calculation may be done in different methods.

Evaluation unit 306 includes a fourth calculation unit 314 which calculates an amount of fuel consumed per unit amount of energy currently stored in high voltage battery BAT (i.e., numerical evaluation F/E), based on results of calculations done by first calculation unit 312, second calculation unit 313 and third calculation unit 310. Evaluation unit 306 further includes a storage unit 316 for storing the current F/E value. As will be described hereinafter, whenever the battery is electrically charged/discharged, the current F/E value is subjected to a predetermined operation, and thus updated and again stored.

Furthermore, the updated numerical evaluation F/E is transmitted to engine control unit 68 and a charge/discharge determination unit 309 and used for control.

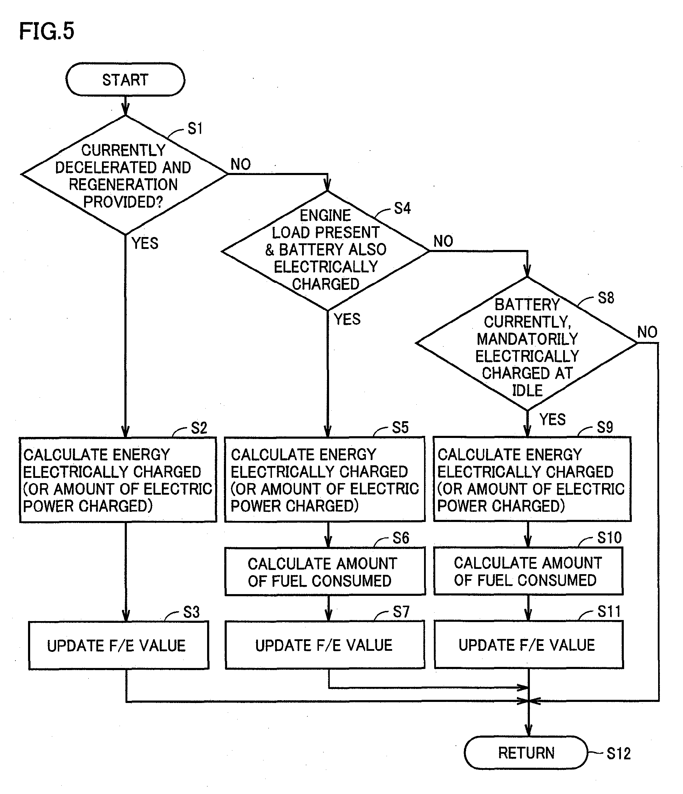

Fig. 5 is a flowchart for illustrating a process performed by control device 14. The process of this flowchart is invoked from a predetermined main routine and performed when high voltage battery BAT is electrically charged.

Referring to Fig. 5, the process is started, and in Step S1 it is determined whether the vehicle is currently decelerated and provides regeneration. If so, the control proceeds to Step S2 to calculate energy electrically charged (or an amount of electric power charged). This electrically charged amount is reflected in updating an F/E value in Step S3.

If in Step S1 it is determined that the vehicle is currently not decelerated or does not provide regeneration, the control proceeds to Step S4. In Step S4, it is determined whether the battery is electrically charged in a condition with an engine load present (or while the engine is operated with a load imposed thereon). The condition with an engine load present means a condition with the engine doing work other than or in addition to operating the electric power generator for electrically charging the battery. The engine generates motive power, which is transmitted to the planetary gear of Fig. 1 and divided into motive power that rotates a driving wheel and the motive power that causes motor generator MG1 to operate as an electric power generator. The divided motive power that rotates the driving wheel is included in the engine load. If in Step S4 it is determined that the battery is currently electrically charged in a condition with an engine load present, Steps S5, S6, and S7 are performed sequentially. In Step S5 the energy electrically (or amount of electric power) charged is calculated. In Step S6 an amount of fuel consumed is calculated. In Step S7 an F/E value is updated.

If in Step S4 it is determined that the battery is not electrically charged in a condition with an engine load present, the control proceeds to Step S8. In Step S8 it is determined whether the battery is currently, mandatorily electrically charged while the vehicle is at idle. Mandatorily, electrically charging the battery while the vehicle is at idle indicates electrically charging the battery in a condition in which the engine is not doing work, e.g., it is at idle. For example, while the vehicle is stopped as it waits for a signal to turn green, the battery may have a state of charge SOC smaller than a target value, and accordingly, the engine may not be stopped and instead operated to rotate motor generator MG1 as an electric power generator to electrically charge high voltage battery BAT. Such a condition is determined as that with the battery currently, mandatorily electrically charged while the vehicle is at idle. Furthermore, the battery may also be mandatorily electrically charged while the vehicle is at idle when the vehicle is not stopped, e.g., when it is inertially traveling.

If in Step S8 it is determined that the battery is currently mandatorily electrically charged while the vehicle is at idle, Steps S9, S10, and S11 are performed sequentially. In Step S9 the energy electrically (or amount of electric power) charged is calculated. In Step S 10 an amount of fuel consumed is calculated. In Step S 11 an F/E value is updated.

Once an F/E value has been updated in any of Steps S3, S7 and S11, the control proceeds to Step S12 to return to the main routine.

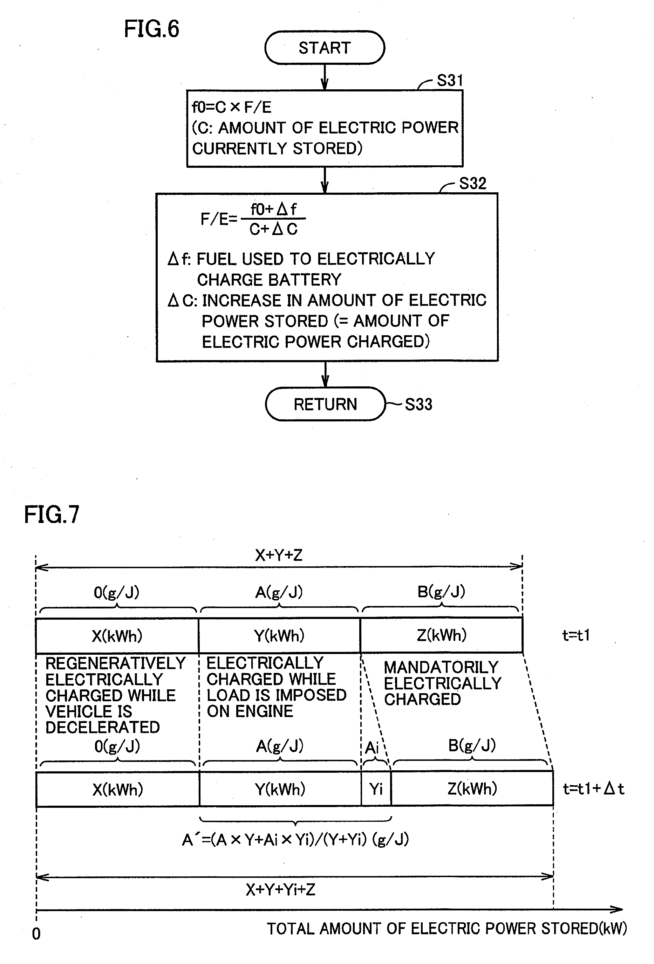

Fig. 6 is a flowchart for illustrating a process to update an F/E value. The process of this flowchart is a process performed as indicated in Fig. 5 at Steps S3, S7 and S11.

Referring to Fig. 6, the process starts, and Step S31 is performed to calculate an amount f0 of fuel used for generating the electrical energy currently stored in high voltage battery BAT. When high voltage battery BAT currently has an amount C of electrical energy or electric power stored therein and an F/E value before it is updated is represented as F/E, f0 can be calculated by the following expression (1):

$$f0 = C * F/E \dots (1).$$

Then in step S32 an updated F/E value is calculated by the following expression (2):

$$F/E \text{ (updated)} = (f0 + \Delta f)/(C + \Delta C) \dots (2).$$

Subsequently, the control proceeds to Step S33 and is shifted to the main routine.

Fig. 7 is a diagram for illustrating an F/E value and updating it as indicated in Fig. 5 and Fig. 6.

With reference to Fig. 7, the upper row represents a state of high voltage battery BAT at time t1, and the lower row represents a state of high voltage battery BAT at time t1 + $\Delta$t.

At time t1, high voltage battery BAT has stored therein electrical energy (also referred to as an amount of electric power or available capacity) configured of electrical energy X (kWh) charged regeneratively when the vehicle is decelerated, electrical energy Y (kWh) charged while the engine is operated with a load imposed thereon, and electrical energy Z (kWh) mandatorily charged while the vehicle is at idle. High voltage battery BAT thus has a total amount X + Y + Z (kWh) of electric power stored therein.

Furthermore, for time t1, X (kWh), Y (kWh), and Z (kWh) are generated with no fuel, an amount A of fuel, and an amount B of fuel, respectively, in grams consumed for one joule.

Thus, numerical evaluation F/E indicating a ratio of an average amount of fuel used and electrical energy to a total amount of electric power stored in high voltage battery BAT is represented by the following expression (3):

$$F/E = (0 * X + A * Y + B * Z)/(X + Y + Z) \quad (g/Kwh) ... (3).$$

1 J = 1 W · s = 2.78 × $10^{-7}$ kWh. Accordingly, ultimately, the F/E value is fuel used (0 * X + A * Y + B * Z) divided by a total amount of electric power in high voltage battery BAT (X + Y + Z) and multiplied by a constant.

With reference to the lower row, or at time t1 + $\Delta$t, high voltage battery BAT has a state, as will be described hereinafter. From the upper row's state, $\Delta$t elapses, meanwhile the battery is electrically charged while the engine is operated with a load imposed thereon, and high voltage battery BAT thus has an amount of electric power stored therein increased by Yi. This increase Yi (kWh) is generated with an amount Ai in grams of fuel consumed for one joule. More specifically, the amount of electric power charged while the engine is operated with a load imposed thereon is Y + Yi and an amount of fuel consumed that corresponds thereto is A * Y + Ai * Yi, and an amount in grams of fuel consumed for one joule in electrically charging the battery while the engine is operated with a load imposed thereon, is updated to A' in the following expression (4):

$$A' = (A * Y + Ai * Yi)/(Y + Yi) \quad (g/J) ... (4).$$

Then, the F/E value is updated as indicated in the following expression (5):

$$F/E' = (0 * X + A' * (Y + Yi) + B * Z)/(X + Y + Yi + Z) \quad (g/Kwh) ... (5).$$

When expression (5) is rewritten with expression (4) used, it can be represented as indicated by the following expression (6):

$$F/E' = (0 * X + A * Y + Ai * Yi + B * Z)/(X + Y + Yi + Z) \quad (g/Kwh) ... (6).$$

Ultimately, similarly as indicated in expression (3), the F/E value is fuel used divided by total amount X + Y + Z of electric power in high voltage battery BAT and multiplied by a constant.

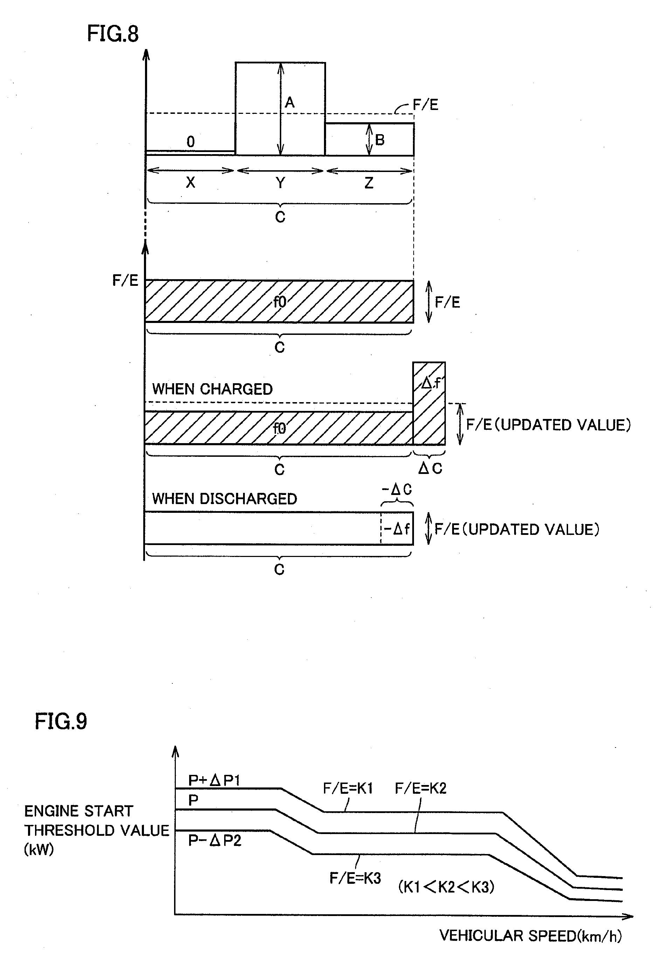

Fig. 8 is another diagram for illustrating updating an F/E value, as shown in Fig. 6.

In Fig. 8, the uppermost row corresponds to the state shown in Fig. 7 at t = t1. For amount X of electric power stored, the vehicle consumes no fuel on average, as the vehicle is regeneratively electrically charged. For amount Y of electric power stored, the vehicle consumes amount A of fuel on average. For amount Z of electric power stored, the vehicle consumes amount B of fuel on average. When these are averaged out for total amount C of electric power stored, an F/E value is provided as indicated by a broken line.

In this case, total amount C of electric power stored is generated using an amount f0 of fuel, which can be represented as A * Y + B * Z. As can be seen in the figure from the second row from the top, amount f0 of fuel can also be represented as C * F/E. Accordingly, in Fig. 6 at Step S31, immediately before an F/E value is updated the F/E value is multiplied by total amount C of electric power stored to calculate amount f0 of fuel.

In Fig. 8 the third row from the top represents that the battery is electrically charged and thus has total amount C of electric power stored therein increased to a total amount C + $\Delta$C and that, for increase $\Delta$C, an amount of fuel $\Delta$f is used. In this case, when the hatched area shown in the figure is averaged by expression (2), an updated F/E value is obtained as follows:

$$F/E \text{ (updated)} = (f0 + \Delta f)/(C + \Delta C) ... (2).$$

Thus in Fig. 6 at Step S32 expression (2) is applied to update an F/E value.

The lowermost row in Fig. 8 is a diagram for illustrating updating an F/E value when the battery is electrically discharged. When the battery is electrically discharged, there is no necessity of updating the F/E value in particular. As shown in the figure, the battery electrically discharges $-\Delta C$ for the sake of illustration. Accordingly, total amount C of electric power stored decreases to C - $\Delta C$. As the total amount of electric power stored is thus updated, in step S31 amount f0 of fuel is calculated as F/E * (C - $\Delta C$). This value is smaller than the previous value by $-\Delta f$ and it can be seen that there is no necessity of updating the F/E value per se when the battery is electrically discharged.

Thus in the present embodiment a numerical evaluation (or the F/E value) is calculated to indicate how much fuel is used to generate electrical energy stored (or an amount of electric power stored) in high voltage battery BAT. It is expected that the F/E value can be used in a variety of applications. For example, for improved actual fuel efficiency, the F/E value can be referred to to determine whether it is better to start the engine to use the engine's torque to cause the vehicle to travel or it is better to stop the engine and operate the motor alone to cause the vehicle to travel. Furthermore, electrically charging the battery under a disadvantageous condition can also be prevented to avoid a significantly increased F/E value.

Second Embodiment

In a second embodiment will be described an example of using the numerical evaluation calculated in the first embodiment, or the F/E value, to control the engine.

Fig. 9 is a diagram representing a threshold value applied to start a hybrid vehicle's engine.

With reference to Fig. 9, the axis of abscissa represents vehicular speed (km/h) and the axis of ordinate represents an engine start threshold value (kW). The engine start threshold value (kW) is for example a threshold value compared with a requested driving power calculated in the control device, a value determined from the accelerator pedal's position, or the like.

Fig. 9 represents engine start threshold values that correspond to three types of F/E values K1, K2 and K3 as three lines, wherein K1 < K2 < K3. In Fig. 9 it can be seen that the larger the F/E value is, the smaller the engine start threshold value is set. For example, if for a vehicular speed of 0 the F/E value is K2 and the engine start threshold value is set at a value P, and when the F/E value decreases to K1, then the engine start threshold value is increased to P + $\Delta$P1. In contrast, for example, if for a vehicular speed of 0 the F/E value is K2 and the engine start threshold value is set at value P, and when the F/E value increases to K3, then the engine start threshold value is decreased to P - $\Delta$P2.

Such control may be done such that a map may be referred to to determine an engine start threshold value for an F/E value or such that when numerical evaluation F/E is larger than a predetermined threshold value between K1 and K2 or a predetermined threshold value between K2 and K3, an engine start threshold value applied to start the engine for each vehicular speed may be decreased.

The engine is thus started with a threshold value modified depending on the F/E value. This is done for the following reason: For example, when electrical energy currently stored in the battery is used to operate the motor to alone cause the vehicle to travel (i.e., travel as an EV), the vehicle apparently achieves improved fuel efficiency. In reality, however, the vehicle travels as an EV with fuel replaced with electrical energy by a product of the engine's efficiency and electrical efficiency (electric power generation efficiency) and the vehicle may not achieve improved actual fuel efficiency. Accordingly, when the F/E value is higher than a reference (i.e., when a large amount of fuel is used to generate an amount of electric power stored in the battery), the engine is started early to use the engine's motive power to cause the vehicle to travel.

For example if the vehicle is caught in a traffic jam, and mandatorily electrically charging the battery while the vehicle is stopped and idles, then causing the vehicle as an EV (with the engine stopped), then mandatorily electrically charging the battery while the vehicle is stopped and idles, and then causing the vehicle as an EV, ... are repeated cyclically, the vehicle may in fact have impaired actual fuel efficiency. In such a case, the engine start threshold value is decreased to stop mandatorily electrically charging the battery while the vehicle is stopped and idles even though a range of slightly poor engine efficiency is used, and the engine is operated to cause the vehicle to travel for optimal control throughout the traffic jam. Using the F/E value to control starting/stopping the engine allows such control.

Third Embodiment

In a third embodiment will be described another example of using the numerical evaluation calculated in the first embodiment, or the F/E value, to control the engine.

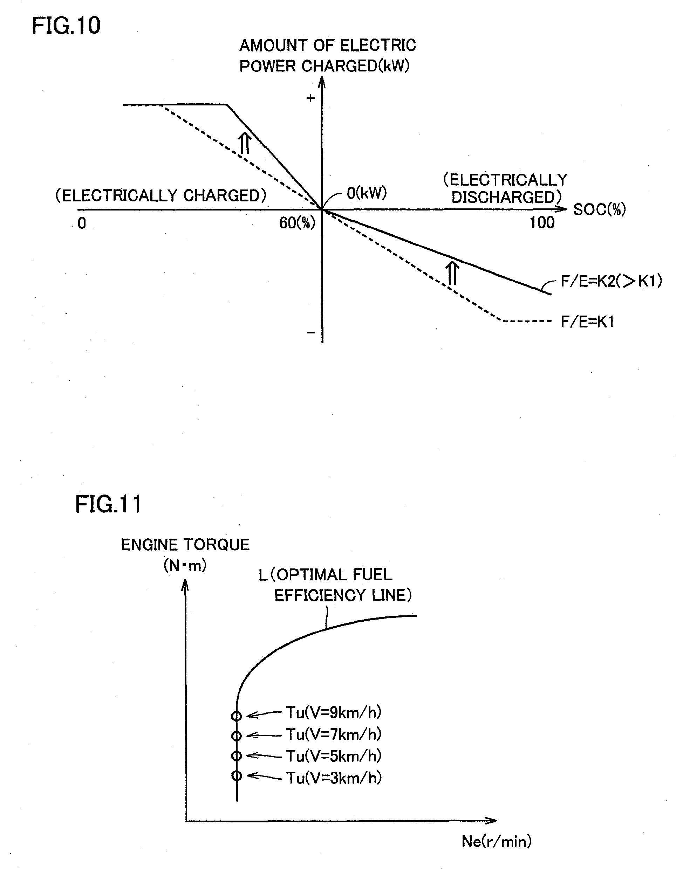

Fig. 10 is a diagram showing a relationship between a state of charge of high voltage battery BAT (%) and an amount of electric power charged thereto (kW).

Referring to Fig. 2 and Fig. 10, when the battery has a state of charge (SOC) smaller than a target value (e.g., 60%), engine 2, inverter 36, and boost unit 32 are controlled to electrically charge the battery positively. In other words, when the SOC is higher than the target value, the control will be applied to electrically charge the battery. Furthermore, when the SOC is higher than the target value (e.g., 60%), engine 2, inverter 36, and boost unit 32 are controlled to electrically charge the battery negatively (i.e., to electrically discharge the battery).

Fig. 10 shows a broken line to represent a target value for an amount applied to control electrically charging/discharging the battery for an F/E value having value K1. In contrast, when the F/E value is increased to value K2, the target value is modified, as indicated by a solid line. Such a map is applied in electrically charging/discharging the battery when the engine is operated with a load imposed thereon.

Thus, when the F/E value has a larger value, a negative gradient applied in electrically charging the battery when the engine is operated with a load imposed thereon is set steeper. This increases an amount of electric power charged in a condition with an engine load present and thus facilitates ensuring required electric power and the battery is less frequently electrically charged mandatorily when the vehicle is caught in a traffic jam and accordingly stopped and idles.

Furthermore, when the F/E value has a larger value, a negative gradient applied in electrically discharging the battery when the engine is operated with a load imposed thereon is set less steep. Thus the battery is electrically discharged in a reduced amount for the same SOC, and the vehicle thus less often travels as an EV and hence the frequency of EV travelling is decreased in a traffic jam.

For example, a threshold value between K1 and K2 and an F/E value can be compared and in accordance therewith the Fig. 10 broken and solid lines can be switched, or a plurality of lines can be determined so that for F/E values, lines respectively corresponding thereto may be selected.

Fourth Embodiment

In a fourth embodiment, an upper limit value of engine load for vehicular speed in mandatorily electrically charging the battery while the vehicle is at idle is modified depending on the F/E value.

Fig. 11 is a diagram for illustrating an upper limit value of engine load for vehicular speed.

With reference to Fig. 11, a hybrid vehicle is controlled to move the engine's operating point on an optimal fuel efficiency line L that defines engine torque Te with respect to engine speed Ne to improve the engine in efficiency.

In electrically charging the battery mandatorily while the vehicle is at idle, an upper limit value Tu of engine torque is determined for vehicular speed. The battery is also mandatorily electrically charged while the vehicle is at idle not only when it has a vehicular speed of zero but also when it has a vehicular speed of about 0-10 km/h, i.e., it travels inertially or the like. If in doing so the vehicle has a low vehicular speed the engine is remarkably noisy and accordingly, as shown in Fig. 11, upper limit value Tu is set so that for lower vehicular speeds, optimal fuel efficiency line L has smaller ranges between a base point and the upper limit value.

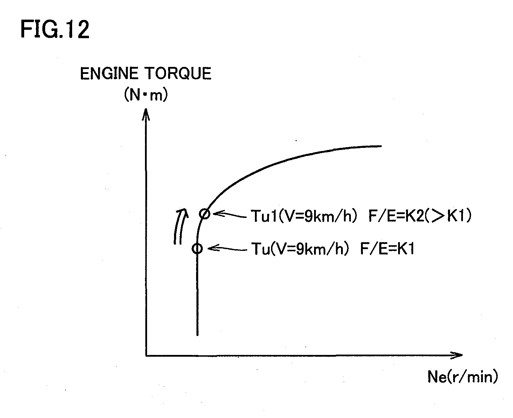

Fig. 12 is a diagram for illustrating modifying upper limit value Tu of the engine's torque for different F/E values.

As shown in Fig. 12, upper limit value Tu is set for a vehicular speed of 9 km/h with an F/E value of K1, and when the F/E value is increased to K2 (> K1), the upper limit value will also be increased to Tu1 (> Tu). Upper limit values for other different vehicular speeds similarly increase for larger F/E values to alleviate limitation imposed by the upper limit values.

It is thus expected that the battery is mandatorily electrically charged with more efficient conversion of fuel to electrical energy. Note, however, that the vehicle becomes noisier as a trade off, and accordingly, upper limit value Tu is alleviated only for large F/E value.

Finally, reference will again be made to the drawings to summarize the first to fourth embodiments. With reference to Fig. 1 and Fig. 4, control device 14 functions as a vehicular control device to control electrically charging/discharging an electrical storage device (or high voltage battery BAT). Control device 14 includes fuel calculation unit 302 which calculates an amount of fuel consumed that is used to electrically charge the electrical storage device, charge calculation unit 304 which calculates electrical energy charged to the electrical storage device, and evaluation unit 306 which calculates numerical evaluation F/E relating to an amount of fuel consumed corresponding to an available amount of electric power charged in the electrical storage device, based on results of calculations done by fuel calculation unit 302 and charge calculation unit 304.

Preferably, control device 14 further includes engine control unit 68 which controls the engine. As shown in Fig. 9, when numerical evaluation F/E is larger than a threshold value, engine control unit 68 decreases an engine start threshold value applied to start the engine for each vehicular speed.

Preferably, the Fig. 4 charge calculation unit 304 includes first calculation unit 312 which calculates an amount of regenerated energy electrically charged to the electrical storage device by regenerated energy provided in deceleration, and second calculation unit 313 which calculates an amount of energy that is generated by an electric power generator (e.g., motor generator MG1) operated with mechanical motive power output from the engine and is electrically charged to the electrical storage device. Fuel calculation unit 302 includes third calculation unit 310 which calculates a portion of an amount f of fuel consumed that corresponds to an amount of electric power charged to the electrical storage device. Evaluation unit 306 includes fourth calculation unit 314 which calculates an amount of fuel consumed per unit amount of energy currently stored in the electrical storage device (i.e., numerical evaluation F/E), based on results of calculations done by first calculation unit 312, second calculation unit 313 and third calculation unit 310.

More preferably, control device 14 further includes charge and discharge determination unit 309 which determines a target value for an amount of electric power charged/discharged to/from the electrical storage device, based on the electrical storage device's state of charge. As shown in Fig. 10, when an amount of fuel consumed per unit amount of energy (or numerical evaluation F/E), calculated by fourth calculation unit 314, increases to be larger than a threshold value, charge and discharge determination unit 309 modifies the target value to increase the amount of electric power charged to and decrease the amount of electric power discharged from the electrical storage device while the engine is operated with a load imposed thereon.

As shown in Fig. 11, more preferably, engine control unit 68 controls the engine to move the engine's operating point on an engine operating line that defines engine torque with respect to engine speed. As shown in Fig. 12, when an amount of fuel consumed per unit amount of energy (or numerical evaluation F/E), calculated by fourth calculation unit 314, increases to be equal to or larger than a threshold value, engine control unit 68 expands a range at a predetermined vehicular speed in a direction allowing the engine to have an increased torque. The engine is allowed to have the operating point moving on the engine operating line within the range.

Note that the control method disclosed in the above embodiments can be performed by software with a computer used. A program that causes a computer to perform the control method may be read from a computer readable storage medium (e.g., a ROM, a CD-ROM, a memory card, or the like) that has the program stored therein to a computer in the control device of the vehicle, or may be provided through a communication line.

It should be understood that the embodiments disclosed herein are illustrative and non-restrictive in any respect. The scope of the present invention is defined by the terms of the claims, rather than the description above, and is intended to include any modifications within the scope and meaning equivalent to the terms of the claims.

REFERENCE SIGNS LIST

1 hybrid vehicle; 2 engine; 4, 6 gear; 14 control device; 16 planetary gear; 18 differential gear; 20R, 20L front wheel; 22R, 22L rear wheel; 28, 30 system main relay; 32 boost unit; 36 inverter; 42 accelerator pedal position sensor; 46 EV prioritization switch; 48 current sensor; 50 voltage sensor; 62 hybrid control unit; 66 battery control unit; 68 engine control unit; 100 computer; 181 A/D converter; 182 ROM; 183 RAM; 184 interface unit; 186 bus; 302 fuel calculation unit; 304 charge calculation unit; 306 evaluation unit; 309 charge and discharge determination unit; 310 third calculation unit; 312 first calculation unit; 313 second calculation unit; 314 fourth calculation unit; 316 storage unit; B0-Bn battery unit; BAT high voltage battery; MG1, MG2 motor generator.

**Claims**

1. A control device for a vehicle to control electrically charging/discharging an electrical storage device (BAT), comprising:

   a fuel calculation unit (302) that calculates an amount of fuel consumed that is used to electrically charge said electrical storage device (BAT);
   a charge calculation unit (304) that calculates electrical energy charged to said electrical storage device (BAT); and
   an evaluation unit (306) that calculates a numerical evaluation (F/E) relating to an amount of fuel consumed corresponding to an available amount of electric power charged in said electrical storage device (BAT), based on results of calculations done by said fuel calculation unit (302) and said charge calculation unit (304).

2. The control device for a vehicle according to claim 1, further comprising an engine control unit (68) to control an engine (2), wherein when said numerical evaluation is larger than a threshold value, said engine control unit (68) decreases an engine start threshold value applied to start said engine (2) for each vehicular speed.

3. The control device for a vehicle according to claim 2, wherein
   said charge calculation unit (304) includes a first calculation unit (312) that calculates an amount of regenerated energy electrically charged to said electrical storage device (BAT) by regenerated energy generated as the vehicle is decelerated, and a second calculation unit (313) that calculates an amount of electrical energy that is generated by an electric power generator operated with mechanical motive power output from said engine (2) and is electrically charged to said electrical storage device (BAT),
   said fuel calculation unit (302) includes a third calculation unit (310) that calculates a portion of an amount of fuel

EP 2 565 094 A1

consumed that corresponds to an amount of electric power charged to said electrical storage device (BAT), and said evaluation unit (306) includes a fourth calculation unit (314) that calculates an amount of fuel consumed per unit amount of energy currently stored in said electrical storage device (BAT), based on results of calculations done by said first calculation unit (312), said second calculation unit (313) and said third calculation unit (310).

4. The control device for a vehicle according to claim 3, further comprising a charge and discharge determination unit (309) that determines a target value for an amount of electric power charged/discharged to/from said electrical storage device (BAT), based on a state of charge of said electrical storage device (BAT), wherein when said amount of fuel consumed per unit amount of energy, calculated by said fourth calculation unit (314), increases to be larger than a threshold value, said charge and discharge determination unit (309) modifies said target value to increase an amount of electric power charged to and decrease an amount of electric power discharged from said electrical storage device while said engine is operated with a load imposed thereon.

5. The control device for a vehicle according to claim 3, wherein when said amount of fuel consumed per unit amount of energy, calculated by said fourth calculation unit (314), increases to be equal to or larger than a threshold value, said engine control unit (68) expands a range at a predetermined vehicular speed in a direction allowing said engine to have an increased torque, said engine being allowed to have an operating point moving on an engine operating line within said range.

FIG.1

FIG.2

# FIG.3

# FIG.4

FIG.5

```
                        ┌──────────┐
                        │  START   │
                        └────┬─────┘
                             │
                             ▼
                  ╱─────────────────╲  S1
                 ╱    CURRENTLY       ╲
                ╱  DECELERATED AND     ╲  NO
                ╲   REGENERATION       ╱────────────┐
                 ╲   PROVIDED?        ╱             │
                  ╲─────────────────╱               ▼
                        │                  ╱──────────────╲  S4
                        │ YES             ╱    ENGINE       ╲
                        │                ╱  LOAD PRESENT     ╲   NO
                        │               ╱  & BATTERY ALSO     ╲──────────┐
                        │               ╲  ELECTRICALLY       ╱          │
                        │                ╲   CHARGED         ╱           ▼
                        │                 ╲───────────────╱     ╱──────────────╲  S8
                        │                       │               ╱   BATTERY      ╲
                        │                       │ YES          ╱  CURRENTLY,      ╲  NO
                        │                       │             ╱  MANDATORILY      ╲──────┐
                        │                       │             ╲  ELECTRICALLY     ╱      │
                        │                       │              ╲  CHARGED AT     ╱       │
                        │                       │               ╲    IDLE       ╱        │
                        │                       │                ╲────────────╱         │
                        │                       │                      │ YES            │
                        ▼                       ▼                      ▼                │
      ┌──────────────────────┐ S2  ┌──────────────────────┐ S5 ┌──────────────────────┐ S9
      │ CALCULATE ENERGY     │     │ CALCULATE ENERGY     │    │ CALCULATE ENERGY     │ │
      │ ELECTRICALLY CHARGED │     │ ELECTRICALLY CHARGED │    │ ELECTRICALLY CHARGED │ │
      │ (OR AMOUNT OF ELECTRIC│    │ (OR AMOUNT OF ELECTRIC│   │ (OR AMOUNT OF ELECTRIC│ │
      │ POWER CHARGED)       │     │ POWER CHARGED)       │    │ POWER CHARGED)       │ │
      └──────────┬───────────┘     └──────────┬───────────┘    └──────────┬───────────┘ │
                 │                            ▼                           ▼             │
                 │                 ┌──────────────────────┐ S6 ┌──────────────────────┐ S10
                 │                 │ CALCULATE AMOUNT     │    │ CALCULATE AMOUNT     │ │
                 │                 │ OF FUEL CONSUMED     │    │ OF FUEL CONSUMED     │ │
                 │                 └──────────┬───────────┘    └──────────┬───────────┘ │
                 ▼                            ▼                           ▼             │
      ┌──────────────────────┐ S3  ┌──────────────────────┐ S7 ┌──────────────────────┐ S11
      │  UPDATE F/E VALUE    │     │  UPDATE F/E VALUE    │    │  UPDATE F/E VALUE    │ │
      └──────────┬───────────┘     └──────────┬───────────┘    └──────────┬───────────┘ │
                 │                            │                           │             │
                 └────────────────────────────┴───────────────────────────┴─────────────┘
                                                       │
                                                       ▼
                                             ┌──────────────┐
                                             │   RETURN     │── S12
                                             └──────────────┘
```

14

FIG.6

START

$S31$

f0=C × F/E
(C: AMOUNT OF ELECTRIC POWER CURRENTLY STORED)

$S32$

$$F/E = \frac{f0 + \Delta f}{C + \Delta C}$$

$\Delta f$: FUEL USED TO ELECTRICALLY CHARGE BATTERY

$\Delta C$: INCREASE IN AMOUNT OF ELECTRIC POWER STORED (= AMOUNT OF ELECTRIC POWER CHARGED)

RETURN — $S33$

FIG.7

X+Y+Z

| 0(g/J) | A(g/J) | B(g/J) |
|---|---|---|
| X(kWh) | Y(kWh) | Z(kWh) |

t=t1

| REGENERATIVELY ELECTRICALLY CHARGED WHILE VEHICLE IS DECELERATED | ELECTRICALLY CHARGED WHILE LOAD IS IMPOSED ON ENGINE | MANDATORILY ELECTRICALLY CHARGED |
|---|---|---|
| 0(g/J) | A(g/J) | Ai | B(g/J) |
| X(kWh) | Y(kWh) | Yi | Z(kWh) |

t=t1+$\Delta$t

$A' = (A \times Y + Ai \times Yi)/(Y + Yi)$ (g/J)

X+Y+Yi+Z

0          TOTAL AMOUNT OF ELECTRIC POWER STORED(kW)

EP 2 565 094 A1

## FIG.8

WHEN CHARGED

WHEN DISCHARGED

## FIG.9

ENGINE START THRESHOLD VALUE (kW)

$P + \Delta P1$

$P$

$P - \Delta P2$

$F/E = K1$    $F/E = K2$

$F/E = K3$    $(K1 < K2 < K3)$

VEHICULAR SPEED(km/h)

FIG.10

AMOUNT OF ELECTRIC
POWER CHARGED(kW)

+

(ELECTRICALLY CHARGED)

(ELECTRICALLY
DISCHARGED)

0(kW)

0

60(%)

100

SOC(%)

F/E=K2(>K1)

F/E=K1

−

FIG.11

ENGINE TORQUE
(N·m)

L(OPTIMAL FUEL
EFFICIENCY LINE)

Tu(V=9km/h)
Tu(V=7km/h)
Tu(V=5km/h)
Tu(V=3km/h)

Ne(r/min)

# FIG.12

ENGINE TORQUE
(N·m)

Tu1(V=9km/h) F/E=K2(>K1)

Tu(V=9km/h) F/E=K1

Ne(r/min)

<table>
<tr><td colspan="2"><strong>INTERNATIONAL SEARCH REPORT</strong></td><td>International application No.<br>PCT/JP2010/057417</td></tr>
</table>

| A. CLASSIFICATION OF SUBJECT MATTER |
|---|
| *B60W10/26*(2006.01)i, *B60K6/445*(2007.10)i, *B60W10/06*(2006.01)i, *B60W20/00* (2006.01)i |

According to International Patent Classification (IPC) or to both national classification and IPC

| B. FIELDS SEARCHED |
|---|
| Minimum documentation searched (classification system followed by classification symbols)<br>B60W10/26, B60K6/445, B60W10/06, B60W20/00 |

Documentation searched other than minimum documentation to the extent that such documents are included in the fields searched

| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| Y | JP 2004-260908 A  (Denso Corp.),<br>16 September 2004 (16.09.2004),<br>paragraphs [0019] to [0069]<br>& US 2004/0164616 A1    & DE 102004009146 A<br>& FR 2851516 A | 1,3,4 |
| Y | JP 11-229916 A  (Toyota Motor Corp.),<br>24 August 1999 (24.08.1999),<br>paragraphs [0032] to [0033]<br>& US 6201312 B1           & DE 19906601 A | 1,3,4 |
| A | JP 2006-339165 A  (Denso Corp.),<br>14 December 2006 (14.12.2006),<br>entire text; all drawings<br>(Family: none) | 1-5 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 July, 2010 (07.07.10) | Date of mailing of the international search report<br>20 July, 2010 (20.07.10) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004260908 A
- JP 2002118905 A